# EUROPEAN PATENT APPLICATION

(11) **EP 2 662 665 A1**
(43) Date of publication of application: **13.11.2013**
(21) Application number: 12167089.7
(22) Date of filing: 08.05.2012
(51) Int. Cl.: G01C 21/36, G06F 3/048

(54) **System and method for displaying supplementary information associated with a graphic object on a display of an electronic device**

(71) Applicant: BlackBerry Limited, Waterloo, ON N2L 3W8 (CA)
(72) Inventor: GÄRDENFORS, Dan Zacharias, SE-211 40 Malmö (SE); JOHANSSON, Karl-Anders Reinhold, SE-211 40 Malmö (SE)
(74) Representative: Patel, Binesh

(57) **Abstract**

Systems and method of displaying supplementary information on a display based on contact points is provided. Two or more contact points are detected on a presented graphic, such as a map or graph shown on a display on an electronic device. A portion of the presented graphic object that is bounded by the contact points is determined and supplementary information representative of the determined portion of the presented graphic object may be displayed.

## Description

### TECHNICAL FIELD

The current application relates to information displayed on an electronic device, and in particular to modifying the information based interaction with a graphic object on the display.

### BACKGROUND

Devices, for example touch screen based devices allow users to interact with graphics and/or information presented on the display. For example, a map, or image may displayed, which allows the user to zoom in or out on the displayed map or image. An example of a gesture used to control the zoom functionality is a pinch gesture, in which a user contacts the display with two fingers, commonly the thumb and index finger, and pinches the fingers together or spreads them apart to control the zoom.

The device may display information based on a currently presented zoom level. For example, if the display is showing a map, information about visible streets, buildings, areas etc, may be displayed. The information shown is associated with the current zoom level. Continuing with the map example, if the zoom level provides a country or content level view, it would not include information associated with lower zoom levels, such as cities, regions, or streets.

It can be inconvenient to have to zoom-in to view information for a lower level. Further, zooming-in to view lower level information may obscure the relation of the lower-level information to the higher-level zoom. Further, zooming-in to a lower-level may require not only the additional lower-level information to be transmitted, but also the graphics associated with the lower-level zoom.

Therefore there is a need for an improved system and method for modifying supplementary information on a display of an electronic device.

### SUMMARY

In accordance with an aspect of the present disclosure there is provided a method for displaying supplementary information associated with a graphic object on a display of an electronic device, the method comprising: detecting two or more contact points on the graphic object presented on the display; determining a portion of the presented graphic object located between the two or more contact points; and displaying supplementary information on the display representative of the determined portion of the presented graphic object.

In accordance with another aspect of the present disclosure there is provided an electronic device for displaying supplementary information associated with a graphic object on a display, the electronic device comprising: a processor for executing instructions; and a memory storing instructions, the instructions when executed by the processor configuring the device to provide functionality for: detecting two or more contact points on the graphic object presented on the display; determining a portion of the presented graphic object located between the two or more contact points; and displaying supplementary information on the display representative of the determined portion of the presented graphic object.

In accordance with yet another aspect of the present disclosure there is provided a non-transitory computer readable memory containing instructions for execution by a processor for providing a method for displaying supplementary information associated with a graphic object on a display, the method comprising: detecting two or more contact points on the graphic object presented on the display; determining a portion of the presented graphic object located between the two or more contact points; and displaying supplementary information on the display representative of the determined portion of the presented graphic object.

### BRIEF DESCRIPTION OF THE DRAWINGS

Further features and advantages of the present disclosure will become apparent from the following detailed description, taken in combination with the appended drawings, in which:
Figure 1 depicts a device displaying a graphic object and supplementary information;
Figure 2 depicts the device displaying the same graphic object as in Figure 1 with supplementary information;
Figure 3 depicts the device displaying the same graphic object as in Figure 1 with supplementary information;
Figure 4 depicts various display elements that may be displayed with a method of displaying supplementary information;
Figure 5 depicts a method for displaying supplementary information on a map based on a multi-point contact;
Figure 6 depicts a further method for displaying supplementary information on a map based on a multi-point contact;
Figure 7 depicts a device displaying a further graphic object and supplementary information;
Figure 8 depicts the device displaying the same graphic object as in Figure 7 with modified supplementary information;
Figure 9 depicts a method for modifying supplementary information on a graphic object based on a multi-point contact; and
Figure 10 shows a block diagram of an electronic device 1000 in accordance with an illustrative embodiment.

It will be noted that throughout the appended drawings, like features are identified by like reference numerals.

### DETAILED DESCRIPTION

Systems and methods for modifying information displayed on a screen based on a gesture are described. Initially, supplementary information may be displayed that is representative of a currently displayed graphic object. A multi-point contact, touch gesture, or a multi-point gesture performed in 3-dimensional (3-D) space, is detected and the displayed supplementary information is displayed or modified to be representative of a portion of the displayed graphic object bounded by the multi-point contacts. The supplementary information is displayed with the originally displayed graphic object.

As described further herein, the systems and methods may be applied to various types of graphic objects and supplementary information. For example, the graphic object could be a map displaying a current zoom level and the supplementary information could be an overlay of map data, such as road and street names. Further, the graphic object could further be a graph or graphic representation of a corpus of data, such as email or messaging information, and the supplementary information could be information generated based on the portion of the corpus represented in the displayed graphic object.

The systems and methods are described further herein as being applied to a touch screen device. It is contemplated that the systems and methods can be applied to other devices that are capable of detecting multi-point contact gestures without requiring physical contact with the display. For example, 3-D gestures may be used to provide multi-point contact gestures through the use of one or more cameras, infrared light sensors, proximity detectors, or other sensors. A multi-point contact gesture performed in 3-D space may require determining the location on the displayed graphic that the 3-D gesture relates to. The contact points may be shown on the display to provide information to the user regarding the location of the multi-point contact gesture. It may be difficult to distinguish a multi-point contact gesture in 3-D space from another type of gesture, such as pointing to an object or moving an object. It is contemplated that further information could be incorporated into determining if the gesture is intended as a multi-point contact gesture or not. For example, a button, key or keys could be pressed on an input control to specify that the gesture is a multi-point gesture. Additionally, or alternatively a voice command could be used to indicate that the 3-D gesture is intended to be a multi-point contact gesture. Although it is contemplated that the multi-point contact may include a gesture performed in 3-D space, the gesture is described below for clarity of the description.

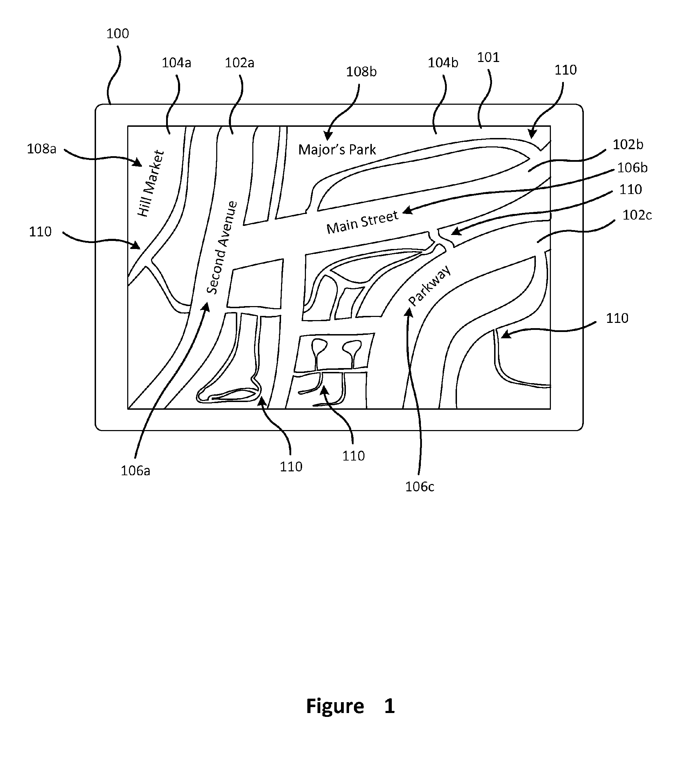

Figure 1 depicts a device 100 displaying a graphic object and supplementary information. The graphic object displayed on the device 100 is a map 101. Maps can typically be displayed at varying zoom or magnification levels, from a low-level zoom displaying a large area, such as a country or continent to a high-level zoom displaying a specific area such as a block or blocks in a city. Each zoom level of the map may be linked with supplementary information that can be displayed with the graphic object of the map's zoom level. The supplementary information may include for example names of places, streets, points of interest, businesses etc. As will be appreciated, the supplementary information associated with a more detailed zoom level may not be able to be readily displayed when the map is not displayed at the corresponding zoom level.

Turning to Figure 1, graphic object such as a map graphic 101 is displayed at a particular zoom level, for example a zoom 'level 3', at which various major roads 102a, 102b, 102c, and locations 104a, 104b are easily displayed and at which smaller roads or streets are also displayed. The supplementary information of the corresponding zoom level may provide labels 106a, 106b, 1106c for the major roads and labels 108a, 108b for the major locations. As depicted, at the currently displayed zoom level, the major streets 102a, 102b, 102c and locations 104a, 104b are large enough to allow their associated labels 106a, 106b, 106c, 108a, 108b to be displayed on them. The map graphic 101 also includes smaller roads 110 that are not large enough to display their names. At each zoom level of the map that is displayed the corresponding supplementary information has an appropriate density for display on the map graphic 101. There may not be sufficient space to display supplementary information associated with different zoom levels of the map at the same time. That is, there is not sufficient space to display the names of all of the visible smaller streets 110 as well as the larger streets and locations. If the supplementary information associated with a more detailed zoom level is desired to be viewed, the map 101 must be zoomed-in in order to provide sufficient space for the smaller streets to be labelled.

Although the zooming in and/or out of a map 101 allows different supplementary information to be displayed, it also requires that the displayed map be correspondingly changed. It may be desirable to display supplementary information associated with a different zoom level of the map, while still displaying the map 101 at the original zoom level. For example, if a user is trying to locate a specific street within a region, it may be desirable to be able to view the map at a zoom level that allows the region to be viewed, while still be able to view the supplementary information associated with a more detailed zoom level, which may provide the names of smaller streets that were not labelled in the region level zoom of the map 101.

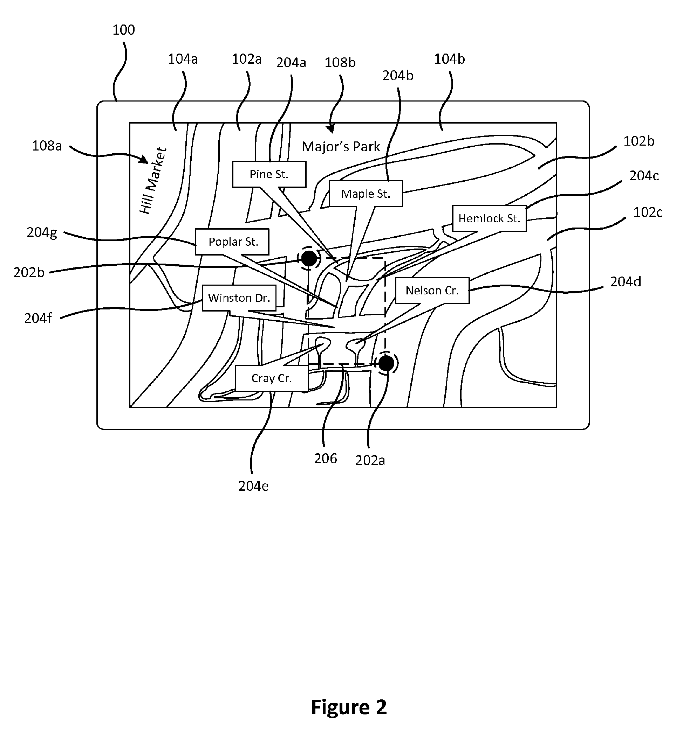

Figure 2 depicts the device 100 displaying the same graphic object as in Figure 1 with supplementary information. A user touches the touch-sensitive display in two or more points, or provides input two points of input relative to the input device. The multi-point contacts are depicted as concentric circles 202a, 202b. The multi-point contacts 202a, 202b are used to indicate an area or portion 206 of the displayed map 101 for which more detailed supplementary information is desired to be displayed. As can be seen from Figures 1 and 2, the same graphic object is displayed in both cases, however, in Figure 2, supplementary information for the portion of the map 101 bounded by the contact points 202a, 202b is displayed.

When displaying supplementary information associated with a more detailed zoom level, as shown in Figure 2, it is not possible to display the supplementary information on the roads or streets directly. Rather, the supplementary information may be displayed on callouts 204a-g, or similar graphics that point to the particular points in the map 101 associated with the supplementary information. The use of the callouts 204a-g for displaying the supplementary information allows the information to be displayed outside of the specific location on the map 101 it is associated with, providing additional room for the display of the more detailed information. Further, the supplementary information from the more detailed zoom level may replace supplementary information associated with the currently displayed zoom level. For example, the callouts for displaying detailed street names may be positioned over one or more of the major roads, obscuring the associated label. As such, the supplementary information associated with the currently displayed zoom level may be omitted from display. As depicted, the labels 106a, 106b, 106c associated with roads 102a, 102b, 102c are not displayed since the area is used to display callouts 204a-g. Supplementary information associated with the currently displayed map 101 may be displayed in areas where the more detailed supplementary information is not displayed. For example, the location labels 108a, 108b remain displayed since no callouts 204a-g are obscuring them. Although described as omitting the display of supplementary information associated with the currently displayed zoom level if it would be obscured, it is noted that it may be done for aesthetic reasons, and if it were desired, the supplementary information associated with the current zoom level could be displayed. The callouts 204a-g used for displaying the more detailed supplementary information could be displayed overtop of the displayed supplementary information of the current zoom level. Alternatively still, the location at which supplementary information associated with the current zoom level is displayed could be moved so that it may be displayed un-obstructed.

If the user removes the contact points 202a, 202b the display may return to the normal display of the map and supplementary information described above with regards to Figure 1. It is contemplated that the displayed or modified supplementary information may remain if only a single contact point is removed, allowing the supplementary information to be more easily visible. The transition between the different screens of Figure 1 and Figure 2 may be abrupt, or a transition effect such as a fading, sliding, popping or other transition may be applied to make the effect of displaying the more detailed supplementary information more appealing. Additionally, if the user maintains the contact points 202a, 202b and pinches them together, or spreads them apart, the map displayed may transition to the more detailed zoom level and the supplementary information displayed in the callouts 204a-g may be transitioned to be displayed in their associated positions, such as on the actual road or street.

While Figure 2 allows the more detailed supplementary information associated with a more detailed zoom level to be displayed for a portion of the displayed map, a portion of the displayed detailed supplementary information may be obscured as a result of the multi-point contact or touch gesture. That is one or more of the displayed callouts 204a-g may be obscured from view by the user's hand orientation.

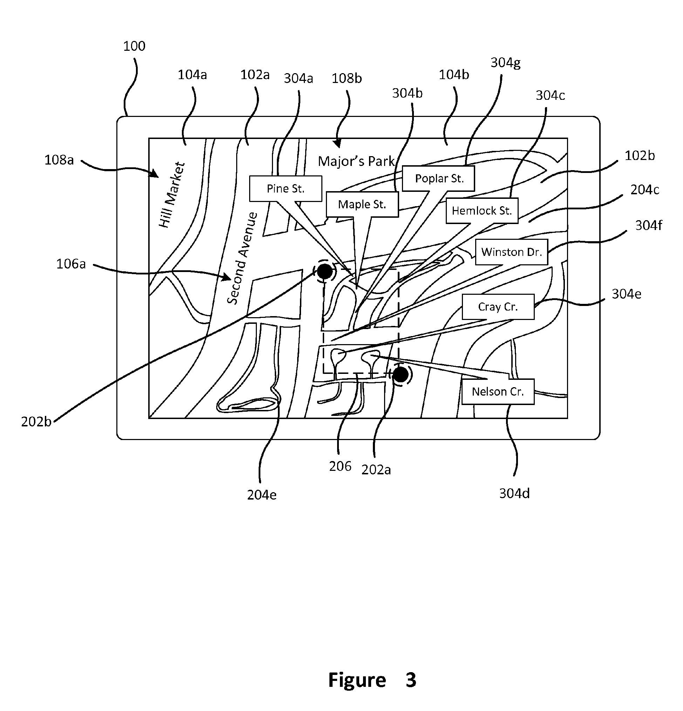

Figure 3 depicts the device 100 displaying the same graphic object as in Figure 1 with supplementary information. The display is substantially similar to that described above with reference to Figure 2, however the callouts 304a-g are positioned such that they would not be obstructed by the user's hand orientation. In Figure 3, it is assumed that the user initiates the multi-point contact with their left hand. As such, the callouts 304a-g are preferentially displayed to the right of the contact points 202a, 202b so that they would not be obscured by the user's hand orientation. As depicted in Figure 3, supplementary information 106a associated with the currently displayed zoom level that was obscured by callouts in Figure 2 would not be obscured by the repositioned callouts 304a-g and as such, may be displayed.

The device 100 may store a hand preference of the user, left or right, to use when determining the positioning of the callouts. Alternatively, if no other information is available with regards to the hand used to initiate the gesture, a hand may be determined from the location of the contact points 202a. For example, it could be assumed that the lower contact point 202a is a user's thumb and the upper contact point 202b is the user's index finger. As such, when the lower contact point 202a is located to the right of the upper contact point 202b, the gesture may be assumed to have been initiated with the user's left hand. Similarly, if the lower contact point 202a is located to the right of the upper contact point 202b, the gesture may be assumed to have been initiated with the user's right hand. The hand determination described provides a best guess of the hand used to initiate the multi-point contact. It is contemplated that the determination of which hand is used to make the contact could be determined using various information in addition to, or as an alternative to, the contact point locations. For example information from a front facing camera may be used to determine which hand made the contact with the graphic object or a gesture, or alternatively which hands made the gesture. Further information could be provided from a proximity sensor to determine which side of the device the gesture was initiated from allowing an assumption to be made about the hand used for the gesture to contact the graphic object. Further still, information from touch sensors could be used to determine which hand the device is being held with allowing an assumption to be made that the gesture was made with the opposite hand.

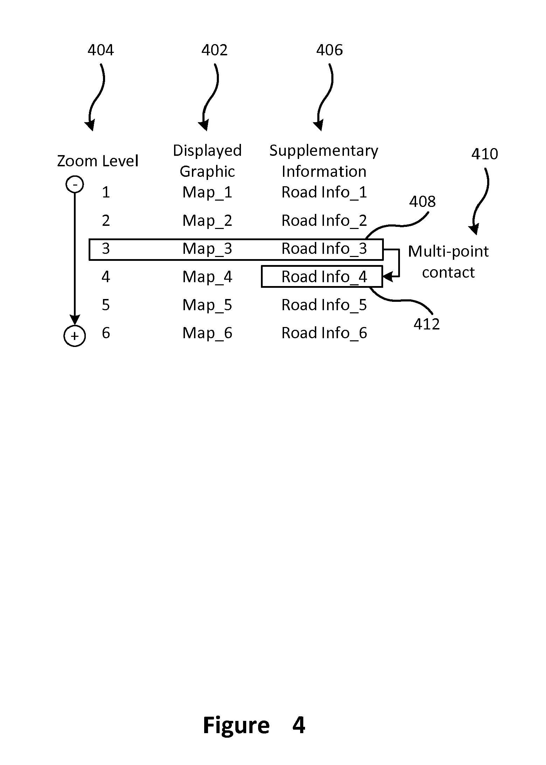

Figure 4 depicts various display elements that may be displayed with a method of modifying the displayed information. The possible display elements 400 include graphic objects 402 for display at various zoom levels 404 and the associated supplementary information 406. As depicted in Figure 4, the graphic objects 402 may comprise a map associated with different zoom levels. The supplementary information 406 may comprise road information used for displaying road names over the displayed map.

As depicted a particular zoom level may display the map and road information for the same zoom level 408. When a multi-point contact 410 is detected, the supplementary information is displayed. In particular, the road information 412 associated with a more detailed zoom level is displayed. The specific road information 412 of the more detailed zoom level to display may be determined from the portion of the displayed map of the current zoom level 408 bounded by the multi-point contacts 410. As depicted in Figure 4, a map may be displayed at various zoom levels, and road information associated with the zoom level can be displayed. A multi-point contact allows road information associated with a more detailed zoom level to be displayed for a portion of the displayed map.

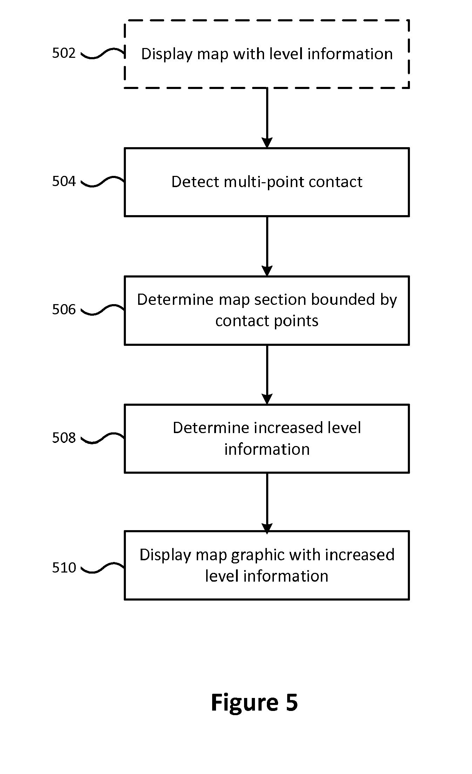

Figure 5 depicts a method for modifying supplementary information displayed on a map based on a gesture. A map may be displayed at a current zoom level with supplementary information for the current level (502). The method 500 may detect a multi-point contact (504). Once the multi-point contact is detected, a section of the currently displayed map bounded by the contact points may be determined (506). Supplementary information associated with a more detailed zoom level than the current zoom level may be determined for the bounded section of the map displayed at the current zoom level (508). The displayed supplementary information may be modified in order to display the more detailed supplementary information with the map displayed at the current zoom level (510).

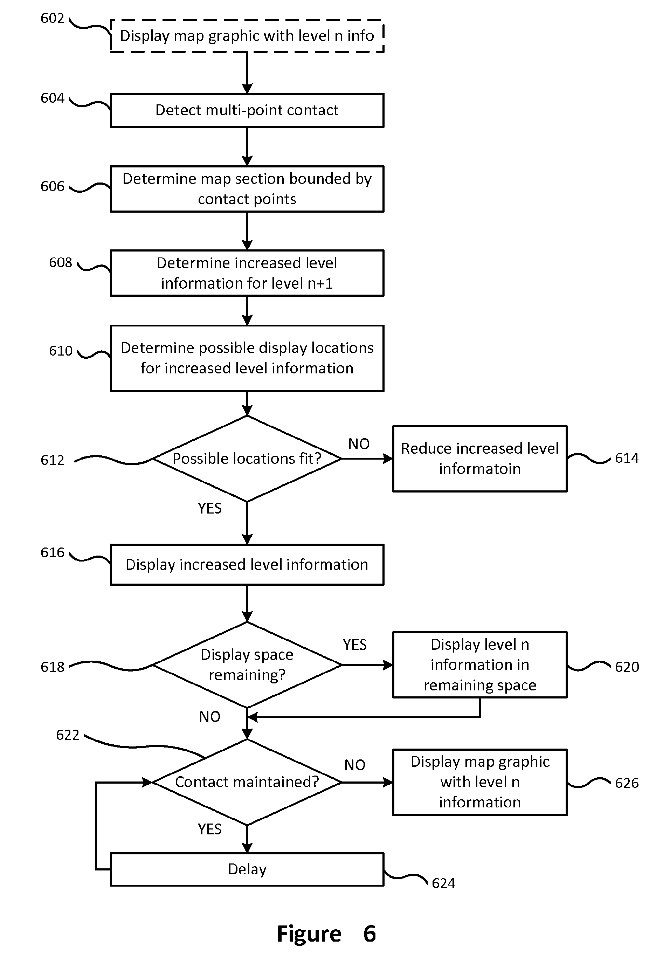

Figure 6 depicts a further method for displaying supplementary information on a map based on a multi-point contact. A map may be displayed at a current zoom level 'n' with supplementary information for the current level 'n' (602). The method 600 may detect a multi-point contact (604). Once the multi-point contact is detected, a section of the currently displayed map bounded by the contact points may be determined (606). Supplementary information associated with a more detailed zoom level 'n+1' than the current zoom level may be determined for the bounded section of the map displayed at the current zoom level (608). Once the supplementary information for zoom level 'n+1' is determined, possible display locations for the supplementary information of the increased zoom level may be determined (610). Determining the possible display locations may comprise determining locations of callouts for the supplementary information that point to locations on the zoom level 'n' map associated with the supplementary information. The determination of the possible location of the supplementary information may comprise determining a hand the multi-point gesture was performed with and determining the possible positions such that they will not be obstructed by the hand. Depending on the size of the bounded location, as well as the amount of supplementary information for the bounded location, it may not be possible to position all of the supplementary information for zoom level 'n+1' on the displayed map without obscuring the possible supplementary information. As such, the method 600 determines if all of the determined possible locations for the supplementary information of zoom level 'n+1' fit on the display (612). If the determined possible locations do not fit on the display without obscuring other supplementary information at possible locations (No at 612) the amount of supplementary information for zoom level 'n+1' may be reduced (614). The supplementary information may be reduced may removing more detailed information, by selecting the longest labels, by randomly selecting supplementary information or by other appropriate techniques. Once the supplementary information for zoom level 'n+1' is reduced, the method 600 may return to determine possible display locations for the reduced supplementary information of zoom level 'n+1' (610). If the determined possible locations do fit on the display (Yes at 612), the supplementary information for zoom level 'n+1' may be displayed at the determined possible locations (616). The method may then determine if there is display space remaining (618), and if there is (Yes at 618) the method 600 may determine and display supplementary information associated with zoom level 'n' that may be displayed without being obscured by the supplementary information from zoom level 'n+1' (620). If there is no display space remaining to display supplementary information from zoom level 'n' (No at 618), or if supplementary information from zoom level 'n' has been displayed, the method may determine if the multi-point contact is maintained (622), or at least one of the contact points from the multi-point contact is maintained. If it is determined that the multi-point contact is maintained (Yes at 622) the method may continuing displaying the map of zoom level 'n', the supplementary information from zoom level 'n+1' and possibly supplementary information from zoom level 'n'. The method 600 may delay for a period of time (624) while maintaining the display before returning to determine if the multi-point contact is maintained. It is contemplated that the multi-point contact may be maintained by keeping both contact points in the same location. Alternatively, the contact may also be maintained by keeping a single contact stationary while removing the other contact point, which may allow the user to move their hand out of the way to view the displayed map and information. If the contact is not maintained (No at 622), for example, all of the contact points have been removed or their positions changed, such as in a pinch gesture, then the display may return to display the map graphic and supplementary information for zoom level 'n' (626). Alternatively, if the contact is not maintained due to a pinch gesture used for zooming, the zoom level may be changed, and the map graphic and associated supplementary information of the new zoom level may be displayed.

The above has described displaying supplementary information based on a multi-point contact for a map type application. Displayed supplementary information may also be modified based on multi-point contact for other types of displayed graphic objects.

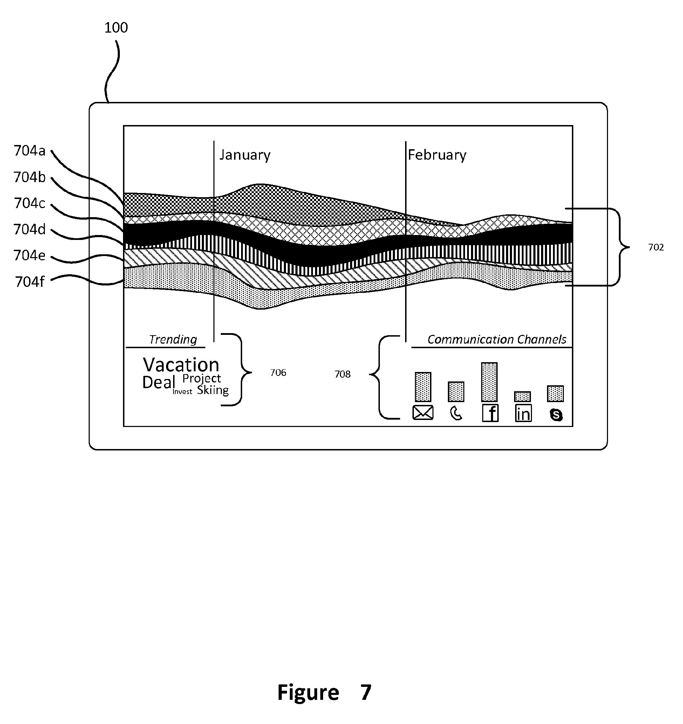

Figure 7 depicts a device 100 displaying a further graphic object and supplementary information. The device 100 of Figure 7 is depicted as displaying a graphic object such as a graph 702 of data generated from a corpus of information. In Figure 7, it is assumed that the graph is representative of a corpus of messaging information sent from and received at the device 100, although other type of information may be displayed. For example, the message information may comprise e-mails, phone calls, instant messages, Facebook messages, Twitter messages and/or other types of messages. Each message in the corpus may include information about the message used to generate the graphic object 702 as well as the supplementary information. For example, the message information may include a day and time at which the message was sent or received, a recipient or sender of the message as well as the text of the message, if appropriate. The main graph 702 may represent the number of messages, of all different types, received and sent to a particular person over a particular time period. That is, each portion 704a, 704b, 704c, 704d, 704e, 704f of the main graph 702 may be associated with a particular user and the size of the graph portion representative of the number of messages sent to or received from the associated user over the time period.

Further, supplementary information based on the message information represented by the graph 702 may be displayed as well. For example, trending or common words or phrases in the messages for the graphed time period may be displayed 706. Similarly, a representation of the number of different types of messages received over the graphed time period may be displayed 708. A user may zoom in or out on the main graph portion 702 in order to modify the time scale that is displayed and the displayed supplementary information 706, 708 may be updated to reflect the new time scale of the graph 702.

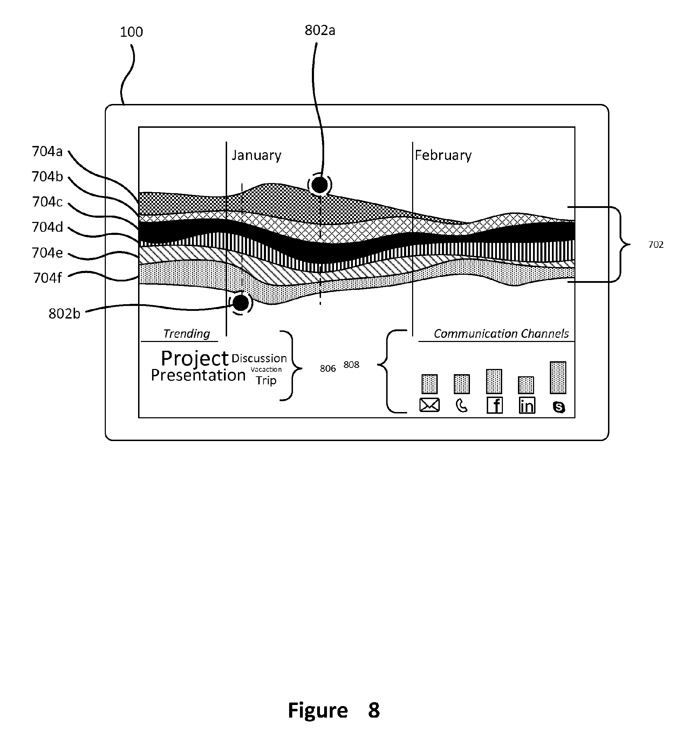

Figure 8 depicts the device 100 displaying the same graphic object as in Figure 7 with modified supplementary information. As depicted two contact points 802a, 802b are detected on the display. The multi-point contact 802a, 802b bounds a section of the main graph 702. Upon detection of the multipoint contact, the displayed supplementary information 806, 808 may be modified in order to reflect the time frame bounded by the multi-point contacts. That is the trending or common words are determined and displayed based, not on the displayed time range of graph 702, but rather on the time range of the multi-point contact 802a, 802b. Similarly the supplementary information representative of the types of messages received and/or sent may be updated to be representative of the time range bounded by the multi-point contact 802a, 802b.

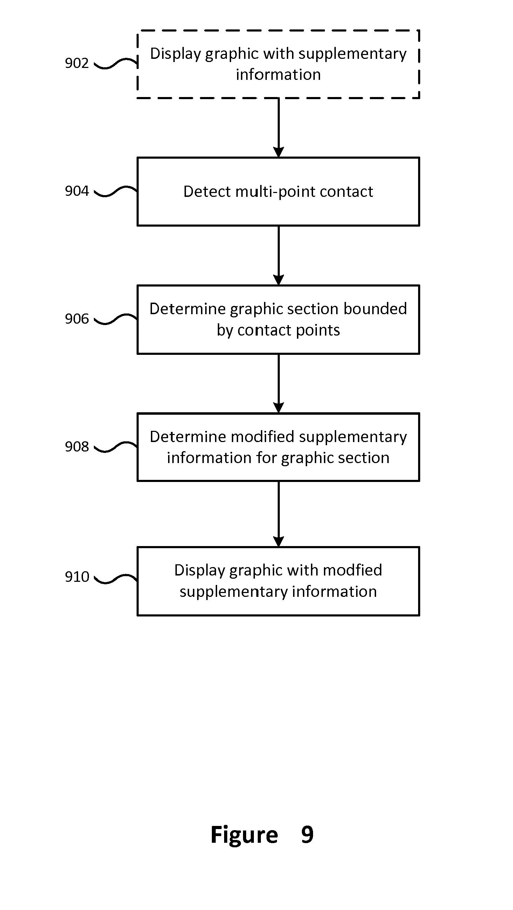

Figure 9 depicts a method for modifying supplementary information displayed on a graphic object based on a multi-point contact or gesture. The method 900 is similar to the method 500 described above; however it may be applied to more general graphic objects as opposed to the map of method 500. A graphic object may be displayed at a current zoom level with supplementary information for the current level (902). The displayed graphic object may be a map, or a graph representative of a corpus of information. It is contemplated that additional graphic objects may be provided that can be displayed at varying zoom levels and that have supplementary information associated with the various zoom levels. The method 900 may detect a multi-point contact (904). Once the multi-point contact is detected, a section of the currently displayed graphic object bounded by the contact points may be determined (906). Supplementary information associated with, or based on, a more detailed zoom level than the current zoom level may be determined for the bounded section of the graphic object (908). The displayed supplementary information may be modified in order to display the more detailed supplementary information with the currently displayed graphic object (910).

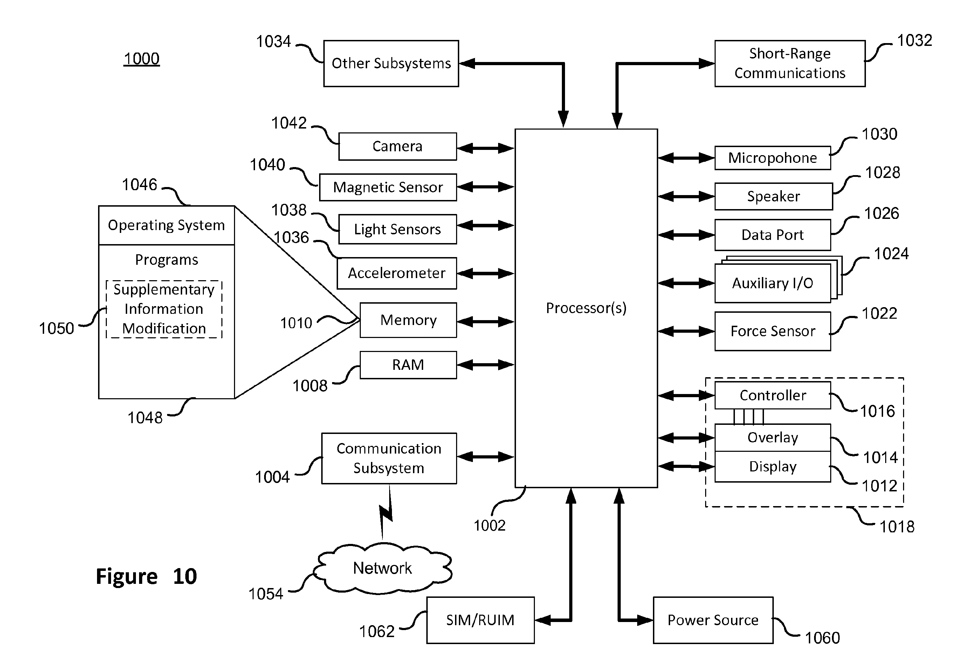

Figure 10 show a block diagram of an electronic device 1000 in accordance with an illustrative embodiment. A processor 1002, a multiple core processor or multiple processors may interface with components or modules of the electronic device to provide functionality required. A touch-sensitive interface is provided by a touch-sensitive display 1018 coupled to the processor 1002. The touch-sensitive display 1018 may be any suitable touch-sensitive display, such as a capacitive, resistive, infrared, dispersive signal, acoustic pulse recognition, optical imaging, surface acoustic wave (SAW). In the presently described embodiment, the touch-sensitive display 1018 is a capacitive touch-sensitive display which includes a capacitive touch-sensitive overlay 1014. The overlay 1014 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The processor 1002 interfaces with memory 1010 providing an operating system 1046 and programs or applications 1048 providing instructions for execution by the processor 1002. Random access memory 1008 is provided for the execution of the instructions and for processing data to be sent to or received from various components of the electronic device. The instructions when executed by the processor 1002 may configure the electronic device to provide various functionality for displaying data. The functionality may include functionality 1050 for modifying supplementary information for a graphic object based on a multi-point contact as described herein. Although the functionality 1050 is depicted as being separate from the operating system 1046, it is contemplated that the functionality could be provided as component of the operating system.

Alternatively or in addition to sensing touch via the touch-sensitive display, proximity sensing input may be used from various input/out devices or sensors of the device. For example an accelerometer 1036, light and/or infrared sensors 1038, magnetic sensor 1040 such as a Hall Effect sensor, and optical or cameras 1042 which may be used for detection of an object above the touch-sensitive display. A communication subsystem 1004 is provided for enabling data to be sent or received with a local area network 1054 or wide area network utilizing different physical layer and access technology implementations. The communication subsystem may be utilized to request and pre-cache data based upon possible gesture event outcomes.

A subscriber identity module or removable user identity module 1062 may be provided depending on the requirement of the particular network access technology to provide user access or identify information. Short-range communications 1032 may also be provided and may include near-field communication (NFC), radio frequency identifier (RFID), Bluetooth technologies. The electronic device may also be provided with a data port 1026 and auxiliary input/output interface for sending and receiving data. A microphone 1030 and speaker 1028 may also be provided to enable audio communications via the electronic device 1000.

The display 1012 of the touch-sensitive display 1018 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area. The non-display area may be utilized to initiate actions, such as a copy or paste action rather than using a menu selection or gesture on the display area of the display.

One or more touches, also known as gestures, may be detected by the touch-sensitive display 1018, and may include the multi-point contact or touch gesture described herein. The contacts or touch gestures may be performed using a finger, stylus or other object. The processor 1002 may determine attributes of the gesture, including a location or locations of contact. Gesture information may include an area of contact or a single point of contact, such as a point at or near a center of the area of contact, known as the centroid. A signal is provided to the controller 1016 in response to detection of a contact or contacts. A contact may be detected from any suitable object, such as a finger, thumb, appendage, or other items, for example, a stylus, pen, or other pointers, depending on the nature of the touch-sensitive display 1018. The location of the contact may remain stationary or the location may move as the detected object moves during the gesture. The controller 1016 and/or the processor 1002 may detect a contact by any suitable contact member on the touch-sensitive display 1018. Similarly, multiple simultaneous touches are detected.

In some embodiments, any suitable computer readable media can be used for storing instructions for performing the methods described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

Although the description discloses example methods, system and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method for displaying supplementary information associated with a graphic object (101, 702) on a display of an electronic device (100), the method comprising:
detecting (504, 904) two or more contact points (202a, 202b, 802a, 8o2b)on the graphic object presented on the display;
determining (506, 906) a portion of the presented graphic object located between the two or more contact points (202a, 202b, 802a, 802b); and
displaying (510, 910) supplementary information (204, 304, 806,808) on the display representative of the determined portion of the presented graphic object (101, 702).

2. The method of claim 1 further comprising:
determining (508, 908) supplementary information associated the determined portion of the graphic object.

3. The method of claims 1 or 2, wherein the presented graphic object is a map displayed at a current zoom level and the supplementary information is map information associated with the current zoom level.

4. The method of claims 1 or 2, wherein the presented graphic object is a map displayed at a current zoom level and the supplementary information is map information associated with a more detailed zoom level than the current zoom level.

5. The method of any one of claims 1 to 4, further comprising:
determining possible display locations of the supplementary information based upon the positions of the contact points.

6. The method of claim 5, further comprising:
determining if all of the possible display locations fit in a defined area on the display without obscuring any of the supplementary information; and
displaying the supplementary information in the determined possible display locations when all of the possible display locations fit in the defined area on the display.

7. The method of claims 5 or 6, further comprising:
reducing the amount of supplementary information when all of the possible display locations do not fit in the defined area on the display; and
determining possible display locations of the reduced supplementary information.

8. The method of claims 1 or 2, wherein the presented graphic object is a graph of information from a corpus and the supplementary information is based on the graphed information.

9. The method of claim 8, wherein the supplementary information displayed is based on the information graphed in the portion of the graph between the two or more contact points.

10. The method of claims 8 or 9 wherein displaying the supplementary information further comprises modifying existing supplementary information displayed based upon the portion of the graph.

11. The method of any one of claims 1 to 10, further comprising:
determining a hand orientation of the two or more contact points were made and determining a position on the graphic object to display supplementary information on the display relative to the determined hand orientation.

12. The method of any one of claims 1 to 11, wherein the two or more contact points on the graphic objected are detected by one or more proximity sensing inputs.

13. An electronic device for displaying supplementary information associated with a graphic object, the electronic device comprising:
a display for displaying the graphic object;
a processor coupled to the display for executing instructions; and
a memory storing instructions, the instructions when executed by the processor configuring the device to provide functionality for performing the method of claims 1 to 12.

14. A non-transitory computer readable memory containing instructions for execution by a processor for providing a method for displaying supplementary information associated with a graphic object on a display, the method of claims 1 to 12.
